# EUROPEAN PATENT SPECIFICATION

(11) **EP 1 622 848 B1**
(45) Date of publication and mention of the grant of the patent: **10.06.2009**
(21) Application number: 04723229.3
(22) Date of filing: 25.03.2004
(51) Int. Cl.: C04B 35/00

(54) **MANUFACTURING METHOD OF A HEAT-RESISTANT MATERIAL, HEAT-RESISTANT STRUCTURE, STRUCTURAL MATERIAL AND DRY MATTER COMPOSITION**
HERSTELLUNGSVERFAHREN FÜR EIN WÄRMEBESTÄNDIGES MATERIAL, WÄRMEBESTÄNDIGE KONSTRUKTION, KONSTRUKTIONSMATERIAL UND TROCKENSTOFFZUSAMMENSETZUNG
PROCEDE DE FABRICATION D'UNE STRUCTURE THERMO-RESISTANTE, STRUCTURE THERMO-RESISTANTE, MATIERE STRUCTURALE ET COMPOSITION DE MATIERE SECHE

(30) Priority: 25.03.2003 FI 20030438
(43) Date of publication of application: 08.02.2006
(73) Proprietor: Bet-Ker Oy, 84100 Ylivieska (FI)
(72) Inventor: RUOTANEN, Kyösti c/o Bet-Ker Oy, FI-84100 Ylivieska (FI); MIETTINEN, Markku c/o Bet-Ker Oy, FI-84100 Ylivieska (FI)
(74) Representative: Partio, Erja
(86) International application number: PCT/FI2004/000168
(87) International publication number: WO 2004/085337

(56) References cited:
- US-A- 4 120 734
- US-A- 5 362 692
- US-A- 5 389 591
- US-A- 5 885 913
- US-A- 5 932 506

## Description

The invention relates to a production method of a heat-resistant and heat-insulating structure as defined in claim 1, a heat-resistant and heat-insulating structure as defined in claim 15, a structural material as defined in claim 17, and a dry matter composition as defined in claim 18 for use in the manufacture of a heat-resistant and heat-insulating structure which find applications in metallurgic processes, heat production processes, cooling processes and processes that require a high temperature.

A heat-resistant and heat-insulating structure or structural material is herein used to mean a structure or structural material which can be used as a structure and an insulator also at high temperatures, even up to 1500°C, without transformations, e.g. on the so-called hot surfaces of process equipment, such as furnaces, heat exchangers, etc.

Previously known are various heat-resistant insulating masses for use as insulation structures at high temperatures in the field of industry. The insulation capability of heat-resistant masses can be improved by increasing the porosity of the mass, e.g. by regulating the particle size distribution and shape of the particles, by burning or thermally decomposing components originally added to the mixture, by arranging hollow or porous components in the mass or by forming gas bubbles in the mass.

Known in prior art from publication US 4158685 is a method and composition for manufacturing a fire-resistant, insulating and foamed structure. In the method, a mixture of water and dry matter is formed, the dry matter containing at least 7.5 w-%, e.g. 10 w-%, cement and 0-50 w-%, e.g. 20 w-%, clay/aluminium oxide, and in addition e.g. 70 w-% fire-resistant aggregate, such as 20 w-% alumina and 50 w-% chamotte. The cement consists mainly of calcium aluminates. After that, a foamed mixture of water, foaming agent and air is formed, which mixture is mixed with a water/dry matter mixture to form a foamed suspension. The water content in the final mixture is 25-40 w-%. The suspension is moulded, and the article is dried and thermally treated.

Known in prior art from publication US 4307197 is a composition containing 45-80 w-% MgO, 1-7 w-% fire-resistant clay-filler, 1-15 w-% fire-resistant glass wool fibre, 3-10 w-% aqueous colloidal silica binder and 0-15 w-% graphite, foaming agent and dispersing agent. One exemplary composition contains 70-80 w-% MgO, 2-7 w-% fire-resistant kaolin clay, dried in a furnace, 5-10 w-% silica alumina glass wool fibre, 5-10 w-% graphite, 0.1-0.5 w-% foaming agent and 5-7 w-% binder. The concentration of moulding water in the mixture is 30-40 w-%.

Known from publication EP 0677495 A2 is an inflatable, fire-resistant and insulating composition containing a dry component and a liquid binding agent. The dry component contains about 10-90 w-% an innoxious, low-density, fire-resistant and insulating material and about 10-90 w-% a high-density fire-resistant material, the total density being about 641-2082 kg/m3. The binding component contains aqueous colloidal silica. The fire-resistant composition contains binding agent to such an extent that there is in the composition about 20-80 w-% aqueous colloidal silica in relation to 100 w-% of dry component.

Know from publication US-A-5 362 692 is a refractory casting slip consisting of a refractory matrix material and a finely divided reactive component, as well as a hydraulic binder and various additives, which can be discharged as free-flowing mass upon 3,5-7,0 w-% addition of water.

Further, US-A-5 389 591 discloses a mixture of grains and particles of fused vitreous silica produced by dry mixing for a refractory material US-A-5 885 913 discloses a precast element of fused quartz for application at high temperatures having a content of about over 90 w-% SiO₂, 1-10 w-% content and 0,1-8 w-% a phosphoric compound.

The preparation of known, air-entrained insulation mass compositions is complicated. The masses are usually prepared in many phases and with several different equipment.

The problem with most of the known compositions is their high water content, which is conventionally more than 25 w-%, which makes the evaporation of water from the structure slow and difficult, and requires a lot of energy. Further, the mechanical resistance, volume stability and insulation properties of known compositions are chiefly not sufficient. Furthermore, the known insulation masses are not self-flowing, and thus not directly mouldable in difficult and confined targets of applications, or arrangeable in complicated casting moulds. A powerful vibration or other external compaction technique must be used in the moulding of the insulation masses, which worsens the porosity and adds to the costs.

One further problem with the known compositions is the formation of the water/dry matter mixture directly. In that case, their preservability is poor, and the compositions must be prepared just before use. Due to this, the transportation is more complicated and costlier. In addition, many previously known insulation masses contain such fibrous components that can be harmful to the health.

The objective of the invention is to overcome the aforementioned disadvantages. One specific objective of the invention is to disclose a new, more easily mountable and more durable composition that is fire- and heat-resistant, as well as method for preparing it. One further objective of the invention is to disclose a new structural material composition in which the content of moulding water is low compared to known compositions, as well as a new, separate dry matter composition.

Characteristic of the method and compositions in accordance with the invention is what has been described in the claims.

The invention is based on a method for forming a heat-resistant and heat-insulating structure. The structure can be used in difficult and confined objects which often are difficult to mould and which may involve a high temperature, e.g. more than 1500°C. According to the invention, a dry matter composition is formed containing 10-60 w-% fine fraction of dry matter the particle size of which is < 0.1 mm and which includes 0,05-0,5 w-% polymer that binds air bubbles, as calculated from the total amount of the dry matter. and 40-90 w-% coarse fraction of dry matter the particle size of which is > 0.1 mm. Prior to the moulding phase, 5-20 w-% water is mixed into the dry matter composition, preferably in the vicinity of the target of application, to form a substantially homogenous and flowing, i.e. a self-flowing structural material without compaction. The structural material is substantially self-flowing and self-smoothing, and can be moulded into the desired structural shape. Water is evaporated from the structural material to form a heat-resistant and heat-insulating and porous structure which preferably does not contain water.

The pore volume of the structure is about 35-50% by volume as calculated from the volume of the entire structure.

In one embodiment of the invention, the coarse fraction contains a so-called aggregate, which can preferably consist e.g. of different types of chamottes, aluminium oxides, burned bauxite clay, aluminium silicates, magnesium silicates, sillimanite, andalusite, kyanite or other natural silicates, such as e.g. phlogopite, serpentine, and vermiculite, and/or of silica or mixtures thereof or corresponding compounds. The density of the aggregate can be 2.0-4.0 kg/l, depending on the requirements of the insulation capability, heat- and fire-resistance and process conditions. The dry matter composition contains coarse fraction in an amount of 60-70 w-% ± 10-20 w-% of the total amount of the dry matter. The coarse fraction can contain any known heat- and/or fire-resistant aggregate; important is only that the dry matter composition can be made self-flowing in conjunction with the addition of a small amount of moulding water.

The polymer that binds air can be a tenside or a non-tenside or any polymer that binds air. In one preferred embodiment, as the tenside, an ethoxylated fatty alcohol having the formula R (OC₂H₄)ₙOH is used. In an alternative embodiment, as the component that binds the air bubbles, it is possible to use e.g. sodium lauryl sulphate, sodium alkene sulphate, fatty alcohol sulphate, modified tall oil-based resin soap, modified resin soap, a mixture of anionic surfactants, a mixture of anionic and non-ionic surfactants or the like.

In one embodiment of the invention, the fine fraction contains a binding agent. In one embodiment, the fine fraction contains less than 20 w-% binding agent, more preferably 8-16 w-% as calculated from the total amount of dry matter. As the binding agent it is possible to use e.g. calcium aluminate cement or the like.

In one embodiment of the invention, the fine fraction contains a fine fraction of an aggregate and/or material selected from the group consisting of chamotte, aluminium oxide, aluminium silicates, magnesium silicates, sillimanite, andalusite, kyanite, other natural silicate, silica or a mixture thereof and/or fine-grained aluminium oxide. In one embodiment, the fine fraction contains 1-35 w-%, calculated from the total amount of aggregate, fine fraction of an aggregate and/or material selected from the group consisting of chamotte, aluminium oxide, aluminium silicates, magnesium silicates, sillimanite, andalusite, kyanite other natural silicate, silica or a mixture thereof and/or fine-grained aluminium oxide. The fine fraction preferably contains 1-15 w-% fine-grained aluminium oxide from the total amount of dry matter. The aluminium oxide can be so-called special aluminium oxide, e.g. reactive aluminium oxide or calcinated aluminium oxide.

In one embodiment of the invention, the fine fraction contains at least one additive. As the possible additives it is possible to use an additive regulating the need for water, an additive improving the flowability, an additive improving the dispersing, an additive improving the chemical resistance, an additive and/or a stabiliser that prevents the air bubbles from surfacing, or a corresponding additive.

In one preferred embodiment, the dry matter preferably contains 30-50 w-% fine fraction.

In one embodiment of the invention, the dry matters are mixed to form a substantially homogenous dry matter composition. In one embodiment, the dry matter composition is put into bags and transported into a storehouse or into the vicinity of the target of application. The storage period of dry matter is at least 6 months.

In one embodiment of the invention, the dry matter is mixed with moulding water, e.g. with some conventional mixer, preferably a minimum of 3 minutes to form a structural material, e.g. in the vicinity of the target of application.

In one embodiment of the invention, the wet structural material mass formed from water and dry matter by mixing is moulded into the desired shape in less than 2 hours after the dry matter composition and water has been mixed. In one embodiment, the wet structural material mass is moulded by means of moulds directly into the target of application, preferably without vibration, to achieve the desired result. In one embodiment, a structural part is formed from the wet structural material mass, which structural part can be attached to the desired target of application.

In one embodiment, slight vibration can be used in the compaction of the structural material into the mould or target of application. In vibration one must note that it raises part of the created air bubbles into the surface of the structure, thus worsening the insulation capability of the structure being generated.

In one embodiment of the invention, after the moulding, water is removed substantially from the structural material by evaporation to form a heat-resistant and heat-insulating structure. In one embodiment, water is evaporated from the structural material at a temperature of 20-400°C. In one embodiment, the structural material is heated first to a temperature of less than 100°C, whereby the material starts to slowly dry. Water can be evaporated preferably by steps.

In one embodiment of the invention, the heat-resistant and heat-insulating structure is treated with heat , e.g. at 400-1200°C, after the structural material has been dried, e.g. after the evaporation of water. In one embodiment, the heat-resistant structure is sintered after the evaporation of water to improve the mechanical resistance. The sintering can be performed e.g. at about 1500°C.

The insulating capability of the structure in accordance with the invention is preferably improved by means of the relatively high porosity of the structure, which is achieved by means of a component, such as polymer, included in the fine fraction and binding air bubbles, as well as by means of the porous spots created in the drying of the moulding water. By means of the polymer and the amount of water it is possible to regulate the porosity. In one preferred embodiment, the pore volume of the structure is about 40-45% by volume, as calculated from the volume of the entire structure. Preferably, about half of the pore volume is created through the air bubbles bound by the polymer and half when the water evaporates from the structure. By achieving pores in the structure it is also possible to prevent steam explosions created in the evaporation of water.

In one preferred embodiment, the fire and heat resistance of the insulating structure is more than 1500°C, preferably even 1800°C. The fire and heat resistance can be determined according to volume 2 of DIN standard 51063, by means of Seger's beam test. The fire- and heat-resistant structure can be determined so that when, based on the aforementioned test, the beam is bigger or as big as No. 18, the structure can withstand a temperature of more than 1500°C.

The invention enables one to achieve a method for forming a heat- and fire-resistant, porous and heat-insulating structure that is simpler and considerably more advantageous than before. In the method of the invention for forming a heat- and fire-resistant structural material and structure no several, separate phases nor special equipment, such as a foam generator, mass pump or vibration devices, are needed.

According to the invention, a dry matter composition containing substantially all the dry matters needed in the formation of a heat-resistant structure but not containing liquid is formed. The dry matter composition can be transported into the vicinity of the target of application as a dry matter, which reduces the costs and adds to the storage period of the composition and thus the life cycle. The dry matter composition can be stored for a period of 6 months or more. The moulding water can be mixed into the dry matter only in the area of application.

The invention has the advantage that the structural material composition is homogenous, self-flowing and self-smoothing, in which case it can be easily and directly shaped into the desired shape, or it can be moulded directly into the target of application. No separate compaction or vibration is needed in the moulding.

Further, the invention has the advantage that in the structural material composition, the concentration of moulding water is low. Due to the low concentration of moulding water, the structural material is easier, faster and more advantageous to dry, and the energy requirement is low in the drying.

The invention enables one to achieve a mechanically firm and durable structure having an excellent heat and fire resistance. The structure has good insulation capabilities as well as mechanical properties, e.g. compression and bending strength and stress resistance. The volume stability of the structure is very good; after burning at a maximum operating temperature, the shrinkage is almost 0%, or the structure may even expand, which is considered a positive property. Also the form stability of the structural material in conjunction with drying is very good. Furthermore, the structural material and structure in accordance with the invention can be used to substitute previously known structures which consist of two or more structural layers to be mounted separately.

Furthermore, an advantage of the invention are the advantageous manufacturing costs of the structure, which are due to the inexpensive raw material and equipment costs. No additives need to be added to the composition in the moulding phase. Furthermore, the compositions of dry matter and structural material do not contain substances harmful to the health, instead their handling is safe.

The heat-resistant and heat-insulating structural material and structure of the invention are well applicable for use in various targets of application, and the method of the invention is applicable for use in preparing various heat-resistant structures in various conditions which require an insulating material for high temperatures, such as furnaces, heat exchangers, boilers, columns and other corresponding equipment and processes in metal industry, oil refineries, chemical pulp industry, metallurgic industry, power plants, etc. The structural material can be used for forming various articles, coatings and back linings of a different size.

In the following, the invention will be described in more detail with reference to the examples of its embodiments.

### Example 1

In a test, a dry matter composition was prepared containing in total about 95 w-% chamotte and aluminium oxide in a fine and coarse fraction; as the polymer binding air bubbles, about 0.1 w-% an ethoxylated fatty alcohol tenside (trade name Silipon RN8018) having the formula R (OC₂H₄)ₙOH; as the binding agent, about 5 w-% calcium aluminate cement, and in addition less than 0.1 w-% additives. The aforementioned dry components were mixed with one another to form a homogenous dry matter composition. The granular size of the dry matters ranged between 0-6 mm, of which 30 w-% was fine fraction (particle size less than 0.1 mm) and 70 w-% was coarse fraction (particle size more than 0.1 mm). The dry matter was put into bags and transferred into the direct vicinity of the target of application, wherein moulding water was added to the dry matter composition, and the dry matter/water mixture was stirred for 4 minutes in such a manner that the water content in the created structural material was about 10 w-%. As a result, a structural material in a self-flowing state was achieved.

### Example 2

The structural material as shown in Example 1 was formed to be a fire-resistant, heat-insulating structure by moulding the wet structural material into a mould in two hours from the addition of the moulding water. The moulding technique is a technique known per se, and is not described more fully herein.

The structural material was dried after the removal of the mould first by air drying in room temperature for 1 day, after which the actual drying was performed in phases while raising the temperature, and the end phase was performed at 400°.

The density of the produced structure was about 1.8 kg/l, total porosity was about 41% by volume (110°C), cold crushing strength 20 MPa, hot pressing strength (1000°C) 35 MPa, hot length (1000°C) 0.68% and the change in length after the burning at 1300°C - 015% and at 1500°C +1.2%.

### Example 3

This test examined the use of the structure as shown in Examples 1 and 2 in a dummy basin as a so-called well block, inside which an instrument was mounted, through which molten steel flows in a metal production process. The results were compared with the results obtained from the use of a previously known and used well block.

Table 1 shows the operating properties of both the structure (Structure 1) of the invention and those of a corresponding previously known structure 2) .

**Table 1**

| Properties | Structure 1 | Structure 2 |
|---|---|---|
| Highest operating temperature, °C | 1550 | 1600 |
| Porosity, % by volume | 41 | 17 |
| Mass consumption, kg/m3 | 1700 | 2800 |
| Granular size | 0-6 | 0-6 |

Structure 1 has a clearly higher porosity due to the composition in accordance with the invention, wherein the porosity is obtained by means of both the air bubbles bound by the polymer and the evaporation of the amount of water.

The time between the examinations with both well blocks was about eight days. The well blocks in accordance with the invention were used during the test period in 150 dummy basins and in a total of 550 meltings. Reference well blocks (Structure 2) were used in 113 dummy basins and 338 meltings.

The examination showed that the heat content of molten metal remains better, i.e. the temperature at the upper end of an instrument inside a so-called well block remains higher when using the structure in accordance with the invention. Thus, the structure in accordance with the invention has a better insulating capability. Similarly, when using the structure in accordance with the invention, the slag purity of steel is better. Furthermore, the structure in accordance with the invention is easier to handle and mount due to its lightness.

### Example 4

This example discloses additional applications for the structural material and method as shown in Examples 1 and 2.

Examples of applications in metallurgic industry:
- insulation lining of lids of a dummy basin, i.e. the casting directly into the lid structure; an advantage compared to the use of a conventional insulating mass is good workability and mechanical strength;
insulating casting of a wall structure of a walking beam furnace of a rolling mill directly into the object; an advantage over the use of a conventional insulation mass is good workability and the subsequent fast lining work and good mechanical strength, which reduces the need for repair and thus the furnace downtime; and
the insulation of the columns of a pusher-type furnace of a rolling mill using the structural parts produced and dried by the method of the invention; an advantage over a corresponding conventional product made by pressing is a good insulation capability and mechanical strength and thus a smaller need for repair.

An embodiment example of a heat production process: air ducting of the arched and afterburning pipe of the fire head of thermal boilers, is used in boilers 20 kW-2 MW; the structural material in accordance with the invention is moulded in moulds to form structural parts of suitable size, the parts obtained are dried, and the dried parts are fitted into the desired object in a thermal boiler; an advantage over conventional insulation materials is a good insulation capability, workability of the material and mechanical strength.

The method in accordance with the invention is applicable in various embodiments for use in forming various fire- and heat-resistant and heat-insulating structures and structural materials, and the fire-and heat-resistant and heat-insulating structural materials and structures are applicable in various embodiments for use in any kind of fire- and heat-resistant insulating.

The embodiments of the invention are not limited to the examples referred to above, instead they can vary within the scope of the accompanying claims.

## Claims

1. A method for manufacturing a heat-resistant and heat-insulating structure, whereby a dry matter composition is formed by mixing, the dry matter composition containing 10-60 w-% fine fraction the particle size of which is < 0.1 mm, and 40-90 w-% coarse fraction the particle size of which is > 0.1 mm, and water is mixed into the dry matter composition to form a structural material, and the structural material is moulded into the desired structural shape and water is removed from the structural material to form a structure, **characterised in that** the fine fraction contains 0.05-0.5 w-% polymer that binds air bubbles and 5-20 w-% water is mixed into the dry matter composition to form a substantially homogenous and flowing structural material and water is evaporated from the structural material to form a heat-resistant and heat-insulating structure and to achieve a pore volume of the structure between 35-50% by volume of the volume of the structure.

2. The method as defined in claim 1, **characterised in that** the coarse fraction contains an aggregate substantially consisting of chamotte, aluminium oxide, aluminium silicate, magnesium silicates, sillimanite, andalusite, kyanite or other natural silicates and/or silica or mixtures thereof.

3. The method as defined in claim 1 or 2, **characterised in that** the fine fraction contains a binding agent.

4. The method as defined in claim 3, **characterised in that** the fine fraction contains less than 20 w-% of the binding agent.

5. The method as defined in any one of claims 1-4, **characterised in that** the fine fraction contains the fine fraction of an aggregate and/or material selected from the group consisting of chamotte, aluminium oxide, aluminium silicates, magnesium silicates, sillimanite, andalusite, kyanite, other natural silicate, silica or a mixture thereof, and/or fine-grained aluminium oxide.

6. The method as defined in claim 5, **characterised in that** the fine fraction contains 1-35 w-% fine fraction of an aggregate and/or material selected from the group consisting of chamotte, aluminium oxide, aluminium silicates, magnesium silicates, sillimanite, andalusite, kyanite, other natural silicate, silica or a mixture thereof, and/or fine-grained aluminium oxide.

7. The method as defined in any one of claims 1-6, **characterised in that** the fine fraction contains at least one additive.

8. The method as defined in any one of claims 1-7, **characterised in that** the dry matters are mixed to form a substantially homogenous dry matter composition.

9. The method as defined in any one of claims 1-8, **characterised in that** the dry matter composition and water are mixed for more than 3 minutes to form a structural material.

10. The method as defined in any one of claims 1-9, **characterised in that** the wet structural material is moulded into the desired shape in less than 2 hours from the mixing of the dry matter composition and water.

11. The method as defined in any one of claims 1-10, **characterised in that** the wet structural material is moulded by means of moulds directly into the application.

12. The method as defined in any one of claims 1-11, **characterised in that** a structural part is formed from the wet structural material by moulding.

13. The method as defined in any one of claims 1-12, **characterised in that** water is removed from the structural material to achieve a pore volume of the structure between 40-45% by volume of the volume of the structure.

14. The method as defined in any one of claims 1-13, **characterised in that** the heat-resistant, heat-insulating structure is treated with heat after water has been evaporated.

15. A heat-resistant, heat-insulating structure, the structure has been formed from a structural material containing water and a dry matter composition containing 10-60 w-% fine fraction the particle size of which is < 0.1 mm and 40-90 w-% coarse fraction the particle size of which is > 0.1 mm and the structural material has been moulded into the desired shape, and water has been removed from the structural material to form a structure, **characterised in that** a structural material contains 5-20 w-% water and the fine fraction of the dry matter composition which includes 0.05-0.5 w-% polymer that binds air bubbles, and water has been removed from the structural material by evaporating to form a heat-resistant and heat-insulating structure, and the pore volume of the structure is 35-50% by volume of the volume of the structure.

16. The structure as defined in claim 15, **characterised in that** the pore volume of the structure is 40-45% by volume of the volume of the structure.

17. A structural material for use in the manufacture of a heat-resistant and heat-insulating structure, the structural material contains water and a dry matter composition containing 10-60 w-% fine fraction the particle size of which is < 0.1 mm, and 40-90 w-% coarse fraction the particle size of which is > 0.1 mm, **characterised in that** the structural material contains 5-20 w-% water and the fine fraction of the dry matter composition, the fine fraction includes 0,05-0,5 w-% polymer that binds air bubbles and the structural material is substantially homogenous and flowing.

18. A dry matter composition for use in the manufacture of a heat-resistant and heat-insulating structure, the dry matter composition contains 10-60 w-% fine fraction the particle size of which is < 0.1 mm, and 40-90 w-% coarse fraction the particle size of which is > 0.1 mm, **characterised in that** the fine fraction includes 0,05-0,5 w-% polymer that binds air bubbles.

## Patentansprüche

1. Verfahren zur Herstellung einer wärmebeständigen und wärmeisolierenden Struktur, wobei eine Trockensubstanz-Zusammensetzung durch Mischen gebildet wird, wobei die Trockensubstanz-Zusammensetzung 10-60 Gew.-% Feinanteil enthält, dessen Partikelgröße unter 0,1 mm liegt, und 40-90 Gew.-% Grobanteil, dessen Partikelgröße über 0,1 mm liegt, und Wasser in die Trockensubstanz-Zusammensetzung zugemischt wird, um ein Strukturmaterial zu bilden, und das Strukturmaterial zu der gewünschten Strukturform formgepresst wird und Wasser aus dem Strukturmaterial entfernt wird, um eine Struktur zu bilden,
**dadurch gekennzeichnet,**
**dass** der Feinanteil 0,05 bis 0,5 Gew.-% Polymer enthält, das Luftblasen bindet, und 5-20 Gew.-% Wasser in die Trockensubstanz-Zusammensetzung zugemischt wird, um ein im Wesentlichen homogenes und flüssiges Strukturmaterial zu bilden, und Wasser aus dem Strukturmaterial verdampft wird, um eine wärmebeständige und wärmeisolierende Struktur zu bilden und um ein Porenvolumen der Struktur zwischen 35-50 Vol.-% des Volumens der Struktur zu erzielen.

2. Verfahren nach Anspruch 1, **dadurch gekennzeichnet, dass** der Grobanteil ein Aggregat enthält, das im Wesentlichen aus Schamotte, Aluminiumoxid, Aluminiumsilikat, Magnesiumsilicaten, Sillimanit, Andalusit, Kyanit oder andere natürliche Silicaten und/oder Siliciumdioxid oder Mischungen davon besteht.

3. Verfahren nach Anspruch 1 oder 2, **dadurch gekennzeichnet, dass** der Feinanteil ein Bindemittel enthält.

4. Verfahren nach Anspruch 3, **dadurch gekennzeichnet, dass** der Feinanteil weniger als 20 Gew.-% des Bindemittels enthält.

5. Verfahren nach einem der Ansprüche 1 bis 4, **dadurch gekennzeichnet, dass** der Feinanteil den Feinanteil eines Aggregats und/oder Materials, das aus der Gruppe bestehend aus Schamotte, Aluminiumoxid, Aluminiumsilicaten, Magnesiumsilicaten, Sillimanit, Andalusit, Kyanit, anderen natürlichen Silicaten, Siliciumdioxid oder eine Mischung davon ausgewählt ist, und/oder feinkörniges Aluminiumoxid enthält.

6. Verfahren nach Anspruch 5, **dadurch gekennzeichnet, dass** der Feinanteil 1-35 Gew.-% Feinanteil eines Aggregats und/oder Materials, das aus der Gruppe bestehend aus Schamotte, Aluminiumoxid, Aluminiumsilicaten, Magnesiumsilicaten, Sillimanit, Andalusit, Kyanit, anderen natürlichen Silicaten, Siliciumdioxid oder eine Mischung davon ausgewählt ist, und/oder feinkörniges Aluminiumoxid enthält.

7. Verfahren nach einem der Ansprüche 1 bis 6, **dadurch gekennzeichnet, dass** der Feinanteil wenigstens einen Zusatzstoff enthält.

8. Verfahren nach einem der Ansprüche 1 bis 7, **dadurch gekennzeichnet, dass** die trockenen Substanzen gemischt werden, um eine im Wesentlichen homogene Trockensubstanz-Zusammensetzung zu bilden.

9. Verfahren nach einem der Ansprüche 1 bis 8, **dadurch gekennzeichnet, dass** die Trockensubstanz-Zusammensetzung und Wasser für mehr als drei Minuten gemischt werden, um ein Strukturmaterial zu bilden.

10. Verfahren nach einem der Ansprüche 1 bis 9, **dadurch gekennzeichnet, dass** das feuchte Strukturmaterial in weniger als zwei Stunden nach dem Mischen der Trockensubstanz-Zusammensetzung und von Wasser zu der gewünschten Form formgepresst wird.

11. Verfahren nach einem der Ansprüche 1 bis 10, **dadurch gekennzeichnet, dass** das feuchte Strukturmaterial mit Hilfe von Formen direkt zu der Anwendung formgepresst wird.

12. Verfahren nach einem der Ansprüche 1 bis 11, **dadurch gekennzeichnet, dass** ein Strukturteil aus dem feuchten Strukturmaterial durch Formpressen geformt wird.

13. Verfahren nach einem der Ansprüche 1 bis 12, **dadurch gekennzeichnet, dass** Wasser aus dem Strukturmaterial entfernt wird, um ein Porenvolumen der Struktur zwischen 40-45 Vol.-% des Volumens der Struktur zu erzielen.

14. Verfahren nach einem der Ansprüche 1 bis 13, **dadurch gekennzeichnet, dass** die wärmebeständige, wärmeisolierende Struktur mit Wärme behandelt wird, nachdem Wasser verdampft worden ist.

15. Wärmebeständige, wärmeisolierende Struktur, wobei die Struktur aus einem Strukturmaterial gebildet worden ist, das Wasser enthält und eine Trockensubstanz-Zusammensetzung, die 10-60 Gew.-% Feinanteil enthält, dessen Partikelgröße unter 0,1 mm liegt, und 40-90 Gew.-% Grobanteil, dessen Partikelgröße über 0,1 mm liegt, und das Strukturmaterial zu der gewünschten Form formgepresst worden ist, und Wasser aus dem Strukturmaterial entfernt worden ist, um eine Struktur zu bilden,
**dadurch gekennzeichnet,**
**dass** ein Strukturmaterial 5-20 Gew.-% Wasser enthält und den Feinanteil der Trockensubstanz-Zusammensetzung, der 0,05 bis 0,5 Gew.-% Polymer enthält, das Luftblasen bindet, und Wasser aus dem Strukturmaterial mittels Verdampfen entfernt worden ist, um eine wärmebeständige und wärmeisolierende Struktur zu bilden, und das Porenvolumen der Struktur 35-50 Vol.-% des Volumens der Struktur beträgt.

16. Struktur nach Anspruch 15, **dadurch gekennzeichnet, dass** das Porenvolumen der Struktur 40-45 Vol.-% des Volumens der Struktur beträgt.

17. Strukturmaterial zur Verwendung bei der Herstellung einer wärmebeständigen und wärmeisolierenden Struktur, wobei das Strukturmaterial Wasser und eine Trockensubstanz-Zusammensetzung enthält, die 10-60 Gew.-% Feinanteil enthält, dessen Partikelgröße unter 0,1 mm liegt, und 40-90 Gew.-% Grobanteil, dessen Partikelgröße über 0,1 mm liegt,
**dadurch gekennzeichnet,**
**dass** das Strukturmaterial 5-20 Gew.-% Wasser enthält und den Feinanteil der trockenen Stoffzusammensetzung, wobei der Feinanteil 0,05 bis 0,5 Gew.-% Polymer umfasst, das Luftblasen bindet, und das Strukturmaterial im Wesentlichen homogen und fließfähig ist.

18. Trockensubstanz-Zusammensetzung zur Verwendung bei der Herstellung einer wärmebeständigen und wärmeisolierenden Struktur, wobei die Trockensubstanz-Zusammensetzung 10-60 Gew.-% Feinanteil enthält, dessen Partikelgröße unter 0,1 mm liegt, und 40-90 Gew.-% Grobanteil, dessen Partikelgröße über 0,1 mm liegt, **dadurch gekennzeichnet, dass** der Feinanteil 0,05 bis 0,5 Gew.-% Polymer enthält, das Luftblasen bindet.

## Revendications

1. Procédé de fabrication d'une structure thermorésistante et thermoisolante, dans lequel une composition de matière sèche est formée par mélange, la composition de matière sèche contenant 10 à 60 % en poids d'une fraction fine dont la taille de particule est < 0,1 mm, et 40 à 90 % en poids d'une fraction grossière dont la taille de particule est > 0,1 mm, et de l'eau est mélangée dans la composition de matière sèche pour former une matière structurale, et la matière structurale est moulée sous la forme structurale souhaitée et l'eau est enlevée de la matière structurale pour former une structure, **caractérisé en ce que** la fraction fine contient 0,05 à 0,5 % en poids d'un polymère qui se lie aux bulles d'air et 5 à 20 % en poids d'eau sont mélangés dans la composition de matière sèche pour former une matière structurale sensiblement homogène et liquide et l'eau est évaporée de la matière structurale pour former une structure thermorésistante et thermoisolante et pour obtenir un volume de pore de la structure compris entre 35 et 50 % en volume du volume de la structure.

2. Procédé selon la revendication 1, **caractérisé en ce que** la fraction grossière contient un agrégat consistant sensiblement en de la chamotte, de l'oxyde d'aluminium, du silicate d'aluminium, des silicates de magnésium, de la sillimanite, de l'andalusite, de la cyanite ou d'autres silicates naturels et/ou de la silice ou des mélanges de celle-ci.

3. Procédé selon la revendication 1 ou 2, **caractérisé en ce que** la fraction fine contient un liant.

4. Procédé selon la revendication 3, **caractérisé en ce que** la fraction fine contient moins de 20 % en poids du liant.

5. Procédé selon l'une quelconque des revendications 1 à 4, **caractérisé en ce que** la fraction fine contient la fraction fine d'un agrégat et/ou d'une matière choisie dans le groupe consistant en la chamotte, l'oxyde d'aluminium, les silicates d'aluminium, les silicates de magnésium, la sillimanite, l'andalusite, la cyanite, d'autres silicates naturels, la silice ou un mélange de celle-ci, et/ou l'oxyde d'aluminium à grain fin.

6. Procédé selon la revendication 5, **caractérisé en ce que** la fraction fine contient 1 à 35 % en poids d'une fraction fine d'un agrégat et/ou d'une matière choisis dans le groupe consistant en la chamotte, l'oxyde d'aluminium, les silicates d'aluminium, les silicates de magnésium, la sillimanite, l'andalusite, la cyanite, d'autres silicates naturels, la silice ou un mélange de celle-ci, et/ou l'oxyde d'aluminium à grain fin.

7. Procédé selon l'une quelconque des revendications 1 à 6, **caractérisé en ce que** la fraction fine contient au moins un additif.

8. Procédé selon l'une quelconque des revendications 1 à 7, **caractérisé en ce que** les matières sèches sont mélangées pour former une composition de matière sèche sensiblement homogène.

9. Procédé selon l'une quelconque des revendications 1 à 8, **caractérisé en ce que** la composition de matière sèche et l'eau sont mélangées pendant plus de 3 minutes pour former une matière structurale.

10. Procédé selon l'une quelconque des revendications 1 à 9, **caractérisé en ce que** la matière structurale humide est moulée sous la forme souhaitée en moins de 2 heures à partir du mélange de la composition de matière sèche et d'eau.

11. Procédé selon l'une quelconque des revendications 1 à 10, **caractérisé en ce que** la matière structurale humide est moulée au moyen de moules directement dans l'application.

12. Procédé selon l'une quelconque des revendications 1 à 11, **caractérisé en ce qu'**une partie structurale est formée à partir de la matière structurale humide par moulage.

13. Procédé selon l'une quelconque des revendications 1 à 12, **caractérisé en ce que** l'eau est enlevée de la matière structurale pour obtenir un volume de pore de la structure compris entre 40 et 45 % en volume du volume de la structure.

14. Procédé selon l'une quelconque des revendications 1 à 13, **caractérisé en ce que** la structure thermorésistante, thermoisolante est traitée avec de la chaleur après évaporation de l'eau.

15. Structure thermorésistante, thermoisolante, dans laquelle la structure a été formée à partir d'une matière structurale contenant de l'eau et une composition de matière sèche contenant 10 à 60 % en poids d'une fraction fine dont la taille de particule est < 0,1 mm, et 40 à 90 % en poids d'une fraction grossière dont la taille de particule est > 0,1 mm, et la matière structurale a été moulée sous la forme souhaitée, et de l'eau a été enlevée de la matière structurale pour former une structure, **caractérisée en ce qu'**une matière structurale contient 5 à 20 % en poids d'eau et la fraction fine de la composition de matière sèche qui comprend 0,05 à 0,5 % en poids d'un polymère qui se lie aux bulles d'air, et l'eau a été enlevée de la matière structurale par évaporation pour former une structure thermorésistante et thermoisolante, et le volume de pore de la structure représente 35 à 50 % en volume du volume de la structure.

16. Structure selon la revendication 15, **caractérisée en ce que** le volume de pore de la structure représente 40 à 45 % en volume du volume de la structure.

17. Matière structurale pour une utilisation dans la fabrication d'une structure thermorésistante et thermoisolante, dans laquelle la matière structurale contient de l'eau et une composition de matière sèche contenant 10 à 60 % en poids d'une fraction fine dont la taille de particule est < 0,1 mm, et 40 à 90 % en poids d'une fraction grossière dont la taille de particule est > 0,1 mm, **caractérisée en ce que** la matière structurale contient 5 à 20 % en poids d'eau et la fraction fine de la composition de matière sèche, la fraction fine comprend 0,05 à 0,5 % en poids d'un polymère qui se lie aux bulles d'air, et la matière structurale est sensiblement homogène et fluide.

18. Composition de matière sèche pour une utilisation dans la fabrication d'une structure thermorésistante et thermoisolante, la composition de matière sèche contient 10 à 60 % en poids d'une fraction fine dont la taille de particule est < 0,1 mm, et 40 à 90 % en poids d'une fraction grossière dont la taille de particule est > 0,1 mm, **caractérisée en ce que** la fraction fine comprend 0,05 à 0,5 % en poids d'un polymère qui se lie aux bulles d'air.
